# EUROPEAN PATENT APPLICATION

(11) **EP 2 416 550 A1**
(43) Date of publication of application: **08.02.2012**
(21) Application number: 10758264.5
(22) Date of filing: 30.03.2010
(51) Int. Cl.: H04M 3/487, G06F 12/00, H04M 11/00, H04W 4/08

(54) **DATA-SHARING SYSTEM, SHARED DATA MANAGEMENT APPARATUS, AND METHOD OF CONTROLLING SHARED DATA MANAGEMENT APPARATUS**

(30) Priority: 31.03.2009 JP 2009084983
(71) Applicant: NTT DOCOMO, INC., Chiyoda-ku Tokyo 100-6150 (JP)
(72) Inventor: ZHANG, Jianfeng, Tokyo 100-6150 (JP); HIRATA, Shoichi, Tokyo 100-6150 (JP); MAKINO, Yuushi, Tokyo 100-6150 (JP)
(74) Representative: Sparing Röhl Henseler Patentanwälte European Patent Attorneys
(86) International application number: PCT/JP2010/002326
(87) International publication number: WO 2010/113484

(57) **Abstract**

The traffic amount of the radio communication is reduced and the load applied to the management side of the system is reduced, thereby making the data shared with only prescribed users in an efficient manner. There is provided a shared data management apparatus, for managing sharing of data stored in a plurality of data storage units, is provided with: a profile group management unit 201 for managing attribution information of users; a group processing unit 202 for creating a user group based upon the attribute information; a sharing policy management unit 203 for managing an authority information permitting a user included in the user group to share the data stored in the data storage unit, so that the profile group management unit 201 identifies the user group permitted to share the data stored based upon the authority information. The shared data management apparatus is further provided with a data sharing process unit 204 for storing the stored data in a data storage unit owned by the user included in the identified user group.

## Description

### Technical Field

The present invention relates to a data sharing system, a shared data management apparatus, and a control method of the shared data management apparatus.

### Background Art

At present, in a service for allowing users to acquire data stored on a network, the user access a server with a communication terminal and requests a data acquisition. An example of such a service is disclosed in Patent Document 1. In the invention disclosed in Patent Document 1, monitoring data acquired by a monitoring device is transmitted to a supervisory computer. IDs are given to the monitoring device such as a monitoring camera and users beforehand. The supervisory computer decides the correspondence between the user ID and the monitoring device ID in accordance with the user's access. When they match, the monitoring data is provided to the user over the Internet.

### Prior Art Document

### Patent Document

Patent Document 1: JP 2008-85783 A

In such a conventional technique, however, each user has to make an access and request data stored in the supervisory computer. For this reason, when the data is delivered to lots of users, lots of users access a server apparatus of the supervisory computer. Lots of accesses cause a problem in that the traffic volume of radio communication is increased and simultaneously the load applied onto the server apparatus is increased.
The present invention has been made in view of the above circumstances, and an object of the present invention is to provide a data sharing system, a shared data management apparatus, and a control method of the shared data management apparatus, whereby in a case where multiple users share data, the traffic amount of radio communication is reduced to alleviate the load applied onto the management side of the system, and in addition, only a prescribed user is allowed to share data in an efficient manner.

### Solution to the Problem

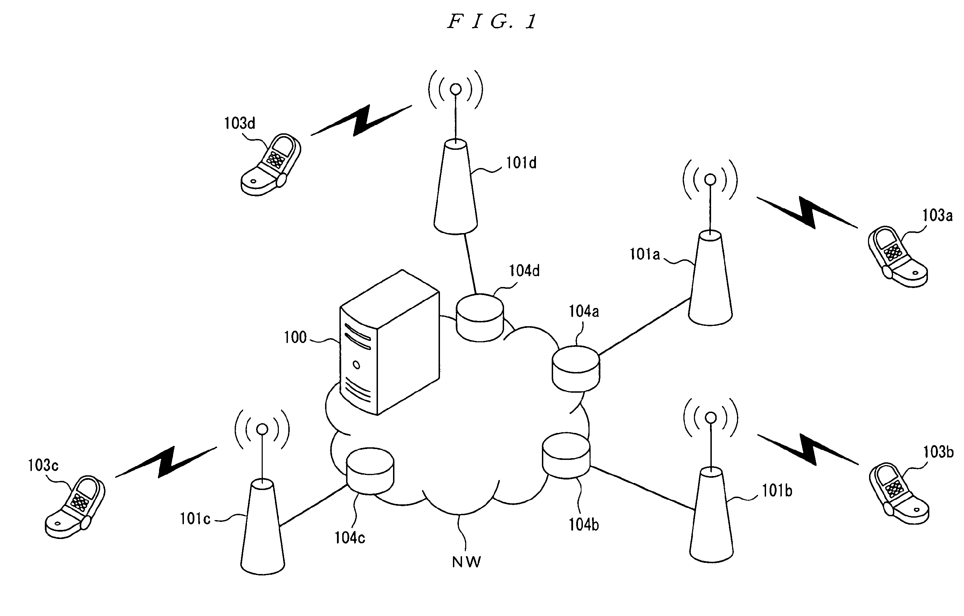

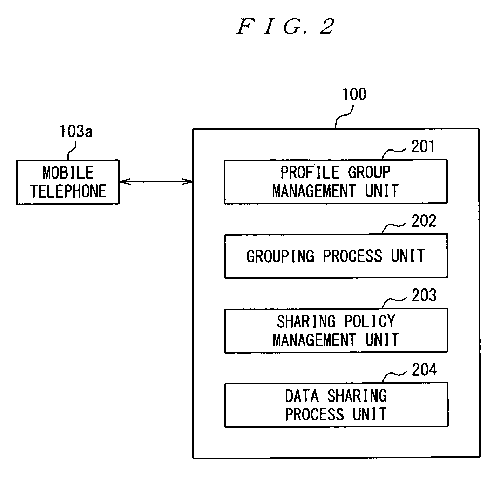

In order to solve the above problem, there is provided a data sharing system as recited in claim 1 of the present invention comprising: a plurality of data storage units (for example, DBs 104a to 104d illustrated in FIG. 1) connected to each other via a radio access network; a shared data management server (for example, a shared data management server 100 illustrated in FIG. 1) for managing sharing of data stored in the plurality of data storage units, wherein the shared data management server comprises: an attribute information management unit (for example, a profile group management unit 201 illustrated in FIG. 2) for managing attribute information on a user who can make a request of the sharing of the data;
a group processing unit (for example, a group processing unit 202 illustrated in FIG. 2) for making a user group including a plurality of users based upon the attribute information (profile information) managed by the attribute information management unit; an authority information management unit (for example, a sharing policy management unit 203 illustrated in FIG. 2) for managing authority information (policy) on an authority for permitting a user included in the user group to share the data stored in the plurality of data storage units; a user group identifying unit (for example, the profile group management unit 201 illustrated in FIG. 2) for identifying the user group permitted to share the data stored in any of the plurality of data storage units based upon the authority information; and a data sharing process unit (for example, a data sharing process unit 204 illustrated in FIG. 2) for storing the stored data in a data storage unit owned by the user belonging to the user group identified by the user group identifying unit. With such an invention, it is possible to share the data on the radio access network in the plurality of data storage units owned by the respective users belonging to the user group. Additionally, in this situation, the data can be delivered to multiple users from the shared data management apparatus, whereby the traffic amount of the radio communication can be reduced and the load on the system administration side can be reduced more than a case where each of multiple users accesses the shared data management apparatus to request the sharing of the data. Furthermore, such a delivery is made according to the authority information, whereby it is possible to provide a data sharing system of permitting only a prescribed user to share the data in an effective manner.

A shared data management apparatus, as recited in claim 2, for managing data sharing stored in a plurality of data storage units connected to each other via a radio access network, the shared data management apparatus comprising: an attribute information management unit for managing attribute information on a user who can make a request of the sharing of the data; a group processing unit for creating a user group including a plurality of users based upon the attribute information managed by the attribute information management unit; an authority information management unit for managing authority information on an authority for permitting a user included in the user group to share the data stored in the plurality of data storage units; a user group identifying unit for identifying the user group permitted to share the data stored in any of the plurality of data storage units based upon the authority information; and a data sharing process unit for storing the data stored in a data storage unit owned by the user belonging to the user group identified by the user group identifying unit. With such an invention, it is possible to share the data on the radio access network in the plurality of data storage units owned by the respective users belonging to the user group. Additionally, in this situation, the data can be delivered to multiple users from the shared data management apparatus, whereby the traffic amount of the radio communication can be reduced and the load on the system administration side can be reduced more than a case where each of multiple users accesses the shared data management apparatus to request the data sharing. Furthermore, such a delivery is made according to the authority information, whereby it is possible to provide a data sharing system of permitting only a prescribed user to share the data in an effective manner.

In the shared data management apparatus, as recited in claim 3, according to the invention of claim 2, when the user belongs to a plurality of user groups, the user group identifying unit may identify one user group, to which the data sharing is permitted, from the plurality of user groups, and the data sharing process unit may store the data on a data storage unit owned by said one user group identified by the user identifying unit. With such an invention, even in a case where a single user belongs to multiple user groups, the authority of the data sharing by the user group is made clear to prevent unintended data sharing.

In the shared data management apparatus, as recited in claim 4, according to the invention of claim 2 or claim 3, the sharing authority management unit may manage the authority relating to at least one of a data type permitted to share and a period while the sharing of the data is permitted, for each of the users and the user groups. With such a configuration, the authority for sharing the data can be set by the type of data such as sound or image or the period. Accordingly, it is possible to set more detailed conditions to permit or deny the data sharing.

In the shared data management apparatus, as recited in claim 5, according to the invention of any one of claim 2 to claim 4, the group processing unit may create the user group based upon at least one of attribute information on the individual user, current location information, and a data content shared in the past. With such a configuration, it is made possible to deliver to multiple users who have the same attribute the data suited to the attribute. Additionally, it is made possible to deliver to multiple users who are in a prescribed range the data necessary for staying in the prescribed range.
Furthermore, it is made possible to deliver to multiple users who have the same preference the data in accordance with the preference.

A control method of a shared data management apparatus, as recited in claim 6, for managing sharing of data stored in a plurality of data storage units connected to each other via a radio access network, the control method comprising: an attribute information acquiring step of acquiring attribute information on a user who can make a request of the sharing of the data; a grouping process step of creating a user group including a plurality of the users based upon the attribute information acquired by the attribute information acquiring step; an authority information acquiring step of acquiring authority information on an authority for permitting the user included in the user group to share the data stored in the plurality of data storage units; a user group identifying step of identifying the user group permitted to share the data stored in any of the plurality of data storage units based upon the authority information; and a data sharing process step of storing the data stored in a data storage unit owned by the user belonging to the user group identified by the user group identifying step. With such an invention, it is possible to share the data on the radio access network in the plurality of data storage units owned by the respective users belonging to the user group. Additionally, in this situation, the data can be delivered to multiple users from the shared data management apparatus, whereby the traffic amount of the radio communication can be reduced and the load on the system administration side can be reduced more than a case where each of multiple users accesses the shared data management apparatus to request the data sharing. Furthermore, such a delivery is made according to the authority information, whereby it is possible to provide a data sharing system of permitting only a prescribed user to share the data in an effective manner.

### Advantageous Effects of the Invention

According to the present invention, it is possible to share a recorded message of a voice mail, melody data, video data, or text data informing an incoming call of a mobile telephone or the like between multiple data storing units owned by respective users belonging to a user group. In addition, in this process, it is possible for the shared data management unit to deliver data to multiple users.
This makes it possible to reduce the traffic amount on the radio communication and alleviate the load applied onto the system management side more than a case where each of multiple users accesses the shared data management apparatus to request the data sharing. Moreover, authority information is managed and the data sharing is limited by the authority information. It is therefore possible to allow only the users who have the proper right to share the data in an efficient manner.

### Brief Description of the Drawings

FIG. 1 is a view illustrative of a data sharing system according to an embodiment of the present invention;
FIG. 2 is a view illustrative of a configuration of a data management server;
FIG. 3 is a functional block diagram of a profile group management unit 201 illustrated in FIG. 2;
FIG. 4 is a view illustrative of a policy managed by the sharing policy management unit illustrated in FIG. 2;
FIG. 5A, FIG. 5B, and FIG. 5C are views illustrative of a method of setting a policy according to an embodiment of the present invention;
FIG. 6 is a view illustrative of a group processing unit illustrated in FIG. 2;
FIG. 7 is a view illustrative of functions of a data sharing process unit illustrated in FIG. 2;
FIG. 8 illustrates a sequence describing registration of profile information in the data sharing system according to an embodiment of the present invention;
FIG. 9 illustrates a flowchart describing the registration of the profile information according to an embodiment of the present invention;
FIG. 10 is a view illustrative of a process of setting a policy according to an embodiment of the present invention;
FIG. 11 is a sequence chart illustrative of a process of a case where a grouping process according to an embodiment of the present invention is manually performed;
FIG. 12 is a sequence chart illustrative of the process of a case for automatic grouping process according to an embodiment of the present invention;
FIG. 13 is a sequence chart illustrative of the data sharing process according to an embodiment of the present invention;
FIG. 14 is a flowchart illustrative of the process performed by the sharing policy management unit in the sequence illustrated in FIG. 13;
FIG. 15 is a sequence chart illustrative of the sharing process particularly suitable for melody data of a mobile telephone according to an embodiment of the present invention;
FIG. 16A is a flowchart illustrative of a process performed by a mobile telephone in the sequence illustrated in FIG. 15; and
FIG. 16B is a flowchart illustrative of a process performed by the sharing policy management unit in the sequence illustrated in FIG. 15.

### Description of Embodiments

Hereinafter, a description will be given of a data sharing system, a shared data management apparatus included in this system, and a control method of the shared data management apparatus.

### (Outline of System)

FIG. 1 is a view illustrative of a data sharing system according to an embodiment of the present invention.
As illustrated, the data sharing system according to the present embodiment includes: multiple databases (hereinafter, referred to as DBs) 104a, 104b, and 104c; a shared data management server 100 for managing users who share data stored in the DBs 104a to 104c and transmitting data to a user who is to share the data; and communication terminal devices each for transmitting the data to the shared data management server 100 to store the data in the DBs 104a to 104c, and receiving the delivered data that have been stored.

As the communication terminal devices, for instance, mobile telephones 103a, 103b, 103c, and 103d are used. The mobile telephones 103a to 103d are connected to a network NW through mobile telephone networks, not illustrated, or base stations 101. Specifically, the network NW is a network with an extended function of enabling both of Personal Computers (PCs) and the mobile telephones 103a to 103d to receive identical services.

Moreover, in an embodiment of the present invention, the communication terminal devices are not limited to mobile telephones and may be applicable to a case where PCs are used as the communication terminal devices.
The DBs 104a to 104d are owned by any of the users, respectively. Data is stored in the DBs 104a to 104d by corresponding users, respectively. The data to be stored include image data, sound data, text data, and program data.

The shared data management server 100 sets users who share the data beforehand, and makes the data stored in the DB shared in accordance with the setting. In addition, "sharing" means that the shared data management server 100 stores the data requested to be shared the data requested to be shared in the DB of a user who requested the data sharing. Furthermore, herein, such a process is referred to as sharing process.
Moreover, for example, coping the data requested to be shared and distributing the data in Push distribution or the like, to the DB of the user who requested the sharing, whereby the shared data management server 100 stores the data.

In addition, in the present embodiment, it is assumed that users create a group. In the description hereinafter, this group will be referred to as "user group". In the user group, the data sharing is permitted. Specifically, the data sharing may be permitted only when each of users who belong , to a user group makes an approval, or may be permitted automatically to all of the users who can share the data (in other words, without approval).

### (Configuration of Data Management Server)

FIG. 2 is a view illustrative of a configuration of the data management server. As illustrated, the shared data management server 100 is provided with: a profile group management unit 201; a group processing unit 202; a sharing policy management unit 203; and a data sharing process unit 204. The profile group management unit 201, the group processing unit 202, the sharing policy management unit 203, and the data sharing process unit 204 may be functions included in the shared data management server 100, or each of the above units may be a server to cooperate with each other and function as the shared data management server 100, as a whole. The shared data management server 100 communicates with various communication terminal devices such as the mobile telephones 103a to 103d over the radio access network NW, as illustrated in FIG. 1.

### 1 Profile Group Management Unit

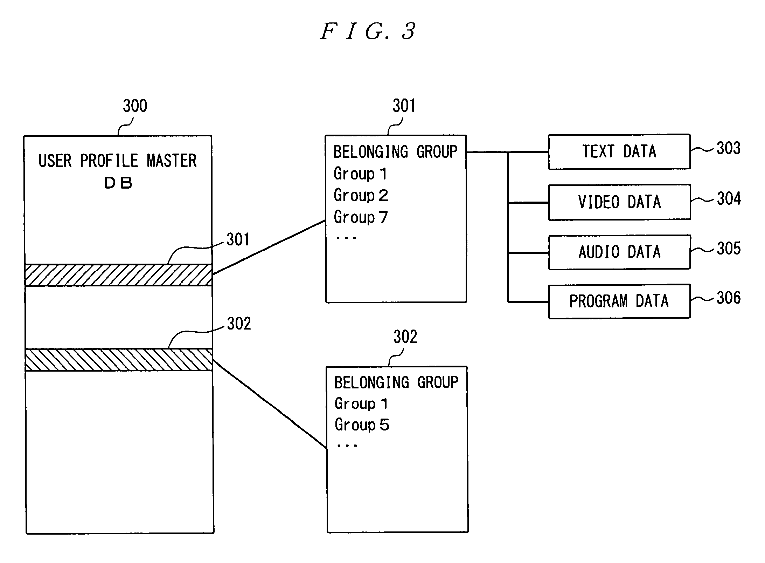

FIG. 3 is a functional block diagram of the profile group management unit 201. The profile group management unit 201 manages profile information and belonging group information of users. Therefore, the profile group management unit 201 is provided with a user profile master DB 300. The profile information of all users who use the data sharing system is stored in the user profile master DB 300.
In addition, in the data sharing system according to the present embodiment, the profile information includes user groups to which the users belong.
A user is not limited to belong to a single user group, and may belong to multiple user groups.

In FIG. 3, profile information 301 and profile information 302 are illustrated, from among the profile information stored in the user profile master DB 300.
The profile information 301 is profile information of, for example, a certain user A, and shows that the user A belongs to at least Groups 1, 2, and 7. In addition, the profile information 302 shows that a user C who is different from the user A belongs to at least Groups 1 and 5.
Furthermore, the DB owned by the user A stores text data 303, video data 304, audio data 305, and program data 306.
Moreover, the profile information further includes personal information such as a user's name, age, address, or profession, and attribute information such as an International Mobile Subscriber Identity (IMSI) or telephone number.

In the data sharing system according to the present embodiment, location information of a user may be detected by use of Global Positioning System (GPS) or the like and the detected location may be stored as the profile information. Additionally, by applying information that the user likes to acquire or preference at the time of making a contract of the data sharing system, the information that the user desires to acquire or the like is included in the profile information. Such information can be used for automatic grouping to be described later.
Furthermore, although not illustrated, the profile information is assumed to include information identifying the DB owned by a user and names of data stored in the DB. The information identifying the DB owned by a user and names of data stored in the DB are opened to another user as necessary. Another user requests the data sharing by use of such information.

### 2 Sharing Policy Management Unit

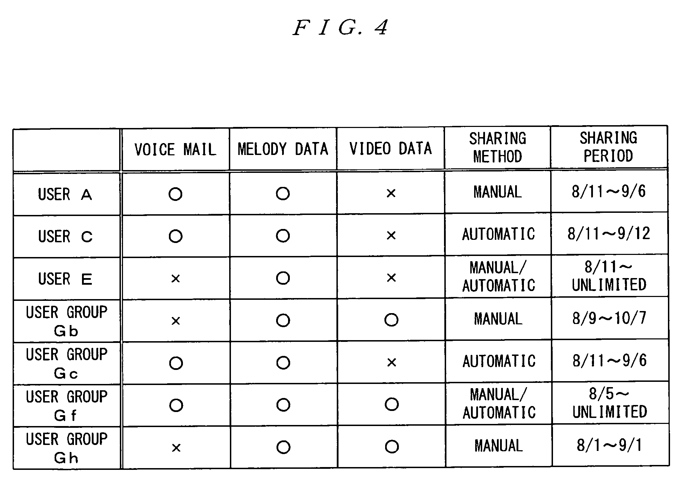

FIG. 4 is a view illustrative of a policy managed by the sharing policy management unit. The policy illustrated in FIG. 4 is information indicative of conditions for a user B relating to whether or not the sharing is permitted to another user and the limitation of sharing (user, user group, period of time, and sharing method) depending on the type of data.
The type of data includes: sound data (sound data recorded by the function of a message-recording telephone, hereinafter referred to as voice mail) ; melody data notifying an incoming call or the like on a mobile telephone (an example is data for use in melody call (registered trademark) of NTT Docomo); and video data (an example is data for use in i-motion (registered trademark) of NTT Docomo).

In the illustrated example, the user B permits a user group Gb to share melody data and video data, but does not permit the user group Gb to share voice mail data. In addition, as to the data permitted to share, since the shared method is set to "manual", only the data manually selected by a user who belongs to the user group Gb is shared out of the data that can be shared. Furthermore, since the period of time for sharing is set from August 9 to October 7, the melody data and the image data are permitted to be shared with the user group Gb from August 9 to October 7.

Moreover, in the present embodiment, not only the user group but also an individual user can be permitted to share the data. In the illustrated example, this user permits a user E to share the melody data only, but does not permit the voice mail data or the video data. The period of time for sharing the melody data is unlimited from August 11, so the sharing is permitted from August 11 or later with no time limit. Specifically, since the sharing method is set to "manual/automatic", the melody data that can be shared may be acquired either manually or automatically.

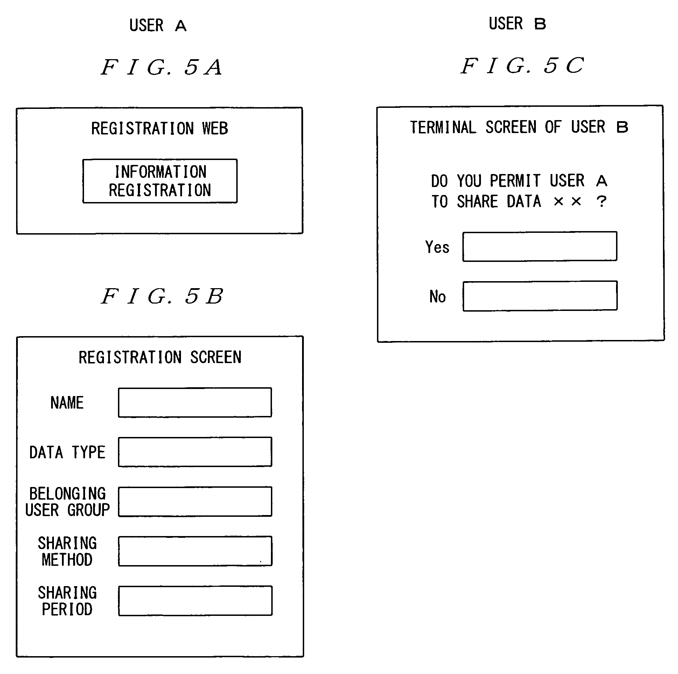

FIG. 5A, FIG. 5B, and FIG. 5C are views illustrative of a method of setting a policy. In the illustrated example, the user A requests a user B for permission of policy setting. FIG. 5A and FIG. 5B are illustrative of operation screens of a communication terminal device with which the user A requests the permission for data sharing. FIG. 5C is illustrative of an operation screen of the communication terminal device that the user B gives the user A permission to the data sharing or gives a denial.

The user A clicks a button of "information registration" from the operation screen illustrated in FIG. 5A. This click displays the operation screen illustrated in FIG. 5B. The user A inputs, with the use of the registration screen displayed, the name of the user A, the data type (at least one of the sound data of voice mail, the melody data, and the video data), whether the permission of sharing is set manually or automatically, the group that the user belongs to, and the period of time for sharing.

As described above, a user is able to belong to multiple user groups. On the operation screen illustrated in FIG. 5B, however, a user selects and inputs one of the multiple user groups to which the user belongs to. When the user requests the sharing and the sharing is permitted, the data can be shared with only other users who belong to the user group that has been input. Additionally, when the user personally desires the data sharing, the user group will not be input.

After the above information is input, the permission of the data sharing that has been requested is notified to the communication terminal device such as a mobile telephone of the user B. By this notification, the user B inputs the permission of sharing (Yes) or denial (No) for every piece of data to which the sharing is requested, from the communication screen of the communication terminal device illustrated in FIG. 5C. The policy illustrated in FIG. 4 is updated by an input result. Specifically, the notification may be made by mail or a popup message may be displayed on the display screen of the communication terminal device.

That is, as to the data that the user A desires to share, when the user B gives permission of the data sharing, the corresponding data is permitted to be shared with the user A or with the user group input by the user A on the policy illustrated in FIG. 4. In addition, as to the data that the user A desires to share, when the user B denies the data sharing, the sharing of the corresponding data is also denied for the user A or for the user group input by the user A on the policy illustrated in FIG. 4. Furthermore, even once the data is permitted to be shared, if the period of time for sharing the data elapses, the sharing policy management unit is configured to automatically deny the sharing.

Moreover, as to the data sharing with a user group, for example, a notification may be given to the user B that there is a request, only when a user with a given authority who belongs to the user group requests the data sharing. Alternatively, only when the permission of the data sharing is requested from a predetermined communication terminal device, a notification may be given to the user B that there is a request.

### 3 Group Processing Unit

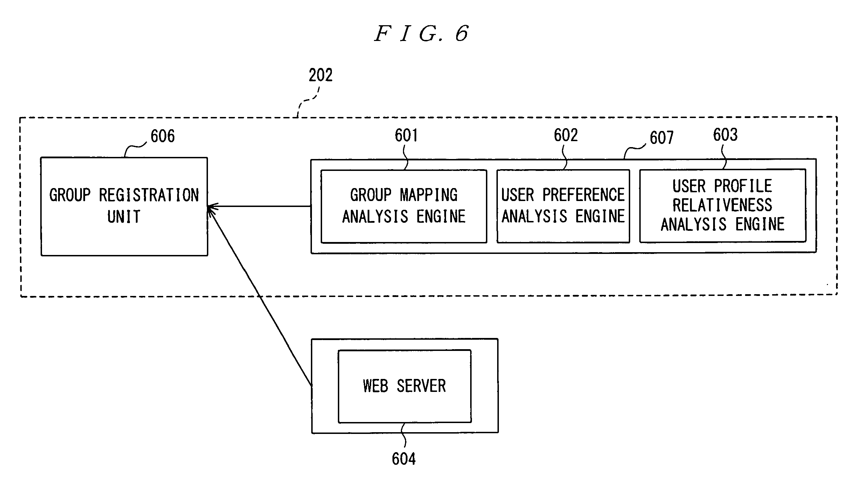

FIG. 6 is a view illustrative of the group processing unit 202 illustrated in FIG. 2. The group processing unit 202 is a component of creating a user group, and performs a grouping process manually or automatically. The user group created by the group processing unit 202 is registered in a group registration unit 606 and managed by a profile group management unit.

When the user A manually encourages the user B to participate in the user group managed by the user A, the user A requests the user B to participate in the user group via the operation screen of the communication terminal device. The request is notified to the user B through a general WEB server 604 included in a network. When the user B desires to participate in the user group of the user A, the desire to participate in the group is notified from the WEB server 604 to the group processing unit 202. When the desire of participation is notified, the group registration unit 606 registers the user B as a member of the user group of the user A.

Additionally, the group processing unit 202 is provided with an automatic grouping unit 607. The automatic grouping unit 607 is provided with: a group mapping analysis engine 601; a user preference analysis engine 602; and a user profile association analysis engine 603. The automatic grouping unit 607 is a component of grouping users automatically by use of a user' s current location, a history of data to which the sharing is requested, or information included in profile information.

The user preference analysis engine 602 is a component of analyzing data with which the user requested to share or a history of data with which the user requested to share to extract user's preferences. The user profile association analysis engine 603 analyzes the user profiles of multiple users to extract common points or the like. The group mapping analysis engine 601 creates a group of users based upon the extracted user's preferences, the common points of the user profile, or the like.

### Grouping Process by Preference

The user preference analysis engine 602 analyzes the history of data shared by users registered in the data sharing system. In this process, as to the text data, a key word common to multiple shared text data is extracted as information on the preference. Additionally, when the sound data or video data relating to music is shared, the title key word of music or image is extracted as the information on the preference.
The group mapping analysis engine 601 creates a user group so that multiple users who have common information on the preference belong to an identical user group. Specifically, in this process, the group mapping analysis engine 601 inquires the user whether or not the user desires to belong to the user group. Only when the user desires it, such a user may be registered in the user group.

### Grouping Process by Attribute (Profile Information)

The user profile association analysis engine 603 extracts common elements such as address, work place, department, gender, hobby, and the like, from the user profile stored in the user profile master DB. The group mapping analysis engine 601 creates a user group so that multiple users who have common information on the address, department or the like belong to an identical user group. With such grouping, for example, information can be delivered to given community residents from a local ward office, the police office, or the like.
In this case, the group mapping analysis engine 601 creates a user group so that multiple users who have the common elements belong to an identical user group.
In this process, whether or not the user desires to belong to the user group may be inquired to register only the user who desires it in the user group.

### Grouping Process by Current Position

Moreover, as described above, when the users' location information is acquired as the user profile by use of GPS or the like, the user profile association analysis engine 603 extracts the users' current locations within a given range as a common element between users.
As a concrete example of a case where the user group is created based upon the location information, conceivable is a case where user's participation in a concert or event is automatically encouraged. In such an example, an organizer of an event creates a user group beforehand, and inquires the users within a given range from the event site set as a center about the participation in the user group. When a user desires to participate in the user group, the user is registered in the event organizer's group. The event organizer stores the information on the event in the DB of the event organizer, thereby allowing the users included in the user group to share the stored information.

In another situation, when a traffic jam or the like occurs, a manager of transportation creates a user group, so that whether or not there is a desire to participate in the user group can be inquired for the users within a range affected by the traffic jam. With such a process, the manager stores information on the situation of the traffic jam, schedule of recovery, detour, or the like in the DB, thereby allowing the users who belong to the user group to share the information.

### 4 Data Sharing Process Unit

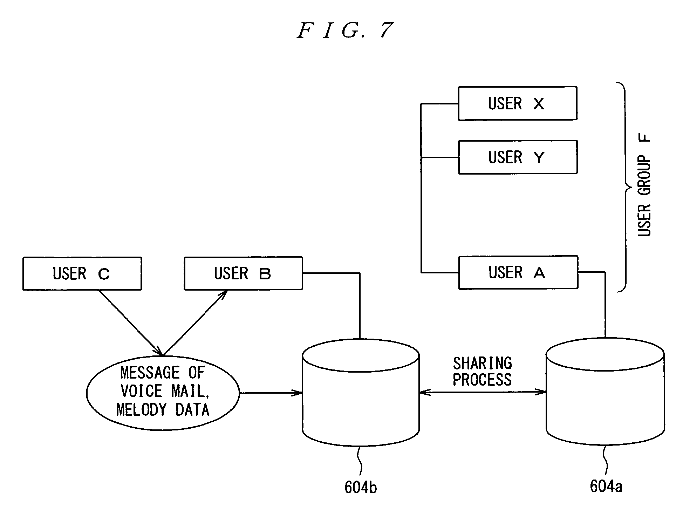

FIG. 7 is a view illustrative of functions of the data sharing process unit 204 illustrated in FIG. 2. The data sharing process unit is a component of sharing the data stored in the DB owned by a user. In the example illustrated in FIG. 7, the user A owns a DB 604a and the user B owns a DB 604b. Additionally, the user A belongs to a user group Gf, and the user group Gf includes a user X and a user Y, in addition to the user A.

When a user C makes a call to the user B, when the sound data of a voice mail (voice mail message) is generated, the sound data is stored in the DB 604b. As illustrated in FIG. 4, the user B permits a user group F to share the sound data of the voice mail. In a case where the user A designates the user group F and sets a policy, the data sharing process unit performs a sharing process by copying the recorded message of the voice mail in the DB 604b to the DB 604a. Moreover, the data sharing process unit performs the sharing process to the DBs owned by the user X and the user Y belonging to the user group F. The sharing process stores the sound data of the voice mail in the users' DBs belonging to the user group F as well as in the DB 604b.

In addition, when the user B downloads the melody data, such downloaded melody data is stored in the DB 604b. As illustrated in FIG. 4, the user B permits the user group F to share the melody data. In a case where the user A designates the user group F and sets a policy, the data sharing process unit performs a sharing process by copying the recorded message in the DB 604b to the DB 604a. Furthermore, the data sharing process unit performs the sharing process to the DBs owned by the user X and the user Y belonging to the user group Gf. The sharing process stores the sound data of the voice mail in the users' DBs belonging to the user group Gf as well as in the DB 604b.

Moreover, the data sharing process is performed manually or automatically, as described above. When performed manually, the sharing process unit requests determination of whether or not the data should be shared to the user A, the user X, and the user Y. Only when the user A or the like desires to share the data, the data sharing is achieved. When performing automatically, since the sound data or the melody data of the answering machine is newly stored, the sharing process unit automatically copies the sound data or the melody data from the DB 604a to the DBs of the user A, the user X, and the user Y.

### (Operation)

Next, the operation of the data sharing system according to the present embodiment will be described.

### 1 Registration of Profile Information

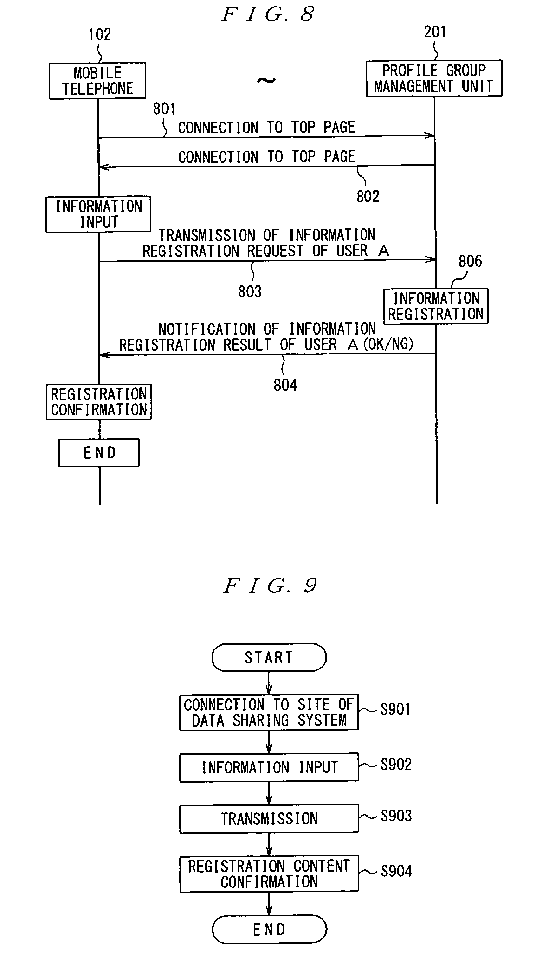

FIG. 8 illustrates a sequence illustrative of registration of profile information in the data sharing system according to the present embodiment. FIG. 9 illustrates a flowchart illustrative of the registration of the profile information, for example, a process performed on the mobile telephone 103a.

As illustrated in FIG. 8, in order to register the profile information, a user makes a connection to a top page of a site provided by the data sharing system by use of, for example, the mobile telephone 103a. This connection allows the mobile telephone 103a and the profile group management unit 201 to transmit and receive data therebetween (step 801, step 802). Additionally, a registration request of the user's profile information is transmitted to the profile group management unit 201 from the mobile telephone 103a (step 803).
The profile group management unit 201 registers the profile information in the user profile master DB in response to the registration request (step 806). Then, the registration result is notified to the mobile telephone 103a (step 804). After the registration is confirmed on the mobile telephone 103a, the registration process of the profile information is completed.

In the above process, the user makes a connection to the site as illustrated in FIG. 9 (step S901), and inputs the user's own profile information from the operation screen of the profile information provided by the site (step S902). The profile information is transmitted to the profile group management unit 201 by operating such as a click of a transmission button displayed on the operation screen (step S903). After transmission, a confirmation screen is displayed for confirming the profile information that has been transmitted to the operation screen. The user confirms the confirmation screen, and confirms the profile information registered by the user (step S904).
Moreover, according to the present embodiment, the user's current location can be stored as the profile information. The current location may be input in the form of address, telephone number, or the like from the operation screen, or may be acquired by use of the GPS function or the like of the mobile telephone 103a.

### 2 Process of Policy Setting

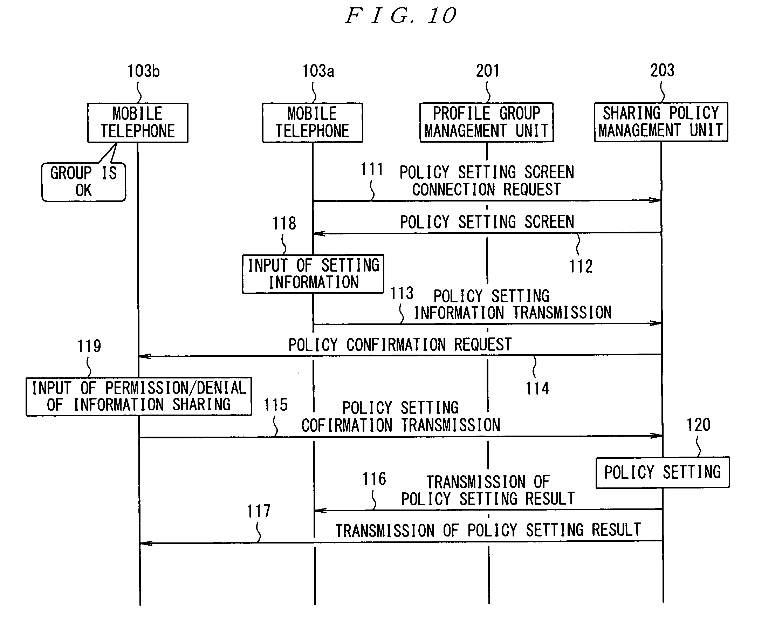

FIG. 10 is a view illustrative of a process of setting a policy in the sharing policy management unit 203. In this process, the user A owns the mobile telephone 103a, and the user B owns a mobile telephone 103b. The user A uses the mobile telephone 103a, and sets the policy of requesting to share the data stored in the DB owned by the user B.

The user A requests a connection to a policy setting screen provided by the site of the data sharing system, from the mobile telephone 103a (step 111). The sharing policy management unit 203 provides the policy setting screen illustrated in, for example, FIG. 5B, to the mobile telephone 103a, in response to the request (step 112). The user A inputs on the policy setting screen the user's name, the data type that the user A desires to share, the user group name used in a case where the data sharing is requested, and the like (step 118). The input information is transmitted to the sharing policy management unit 203 (step 113). The sharing policy management unit 203 transmits the information that has been input to the mobile telephone 103b to the mobile telephone 103b to request the confirmation of the policy setting (step 114).

The user B confirms the transmitted information on the mobile telephone 103b, and determines whether the data sharing with the user A or the user group to which the user A belongs is permitted or denied (step 119). The determination result is transmitted to the sharing policy management unit 203 as information of the policy setting confirmation (step 115). The sharing policy management unit 203 sets the policy of the user B, when the user A permits the data sharing (step 120), and registers as illustrated in, for example, FIG. 4. Then, the result of the policy setting is transmitted to the mobile telephone 103a and the mobile telephone 103b (step 116, step 117). Specifically, the result of the policy setting may be transmitted to a communication terminal device of another user included in a user group to which the user A belongs.

### 3.1 Grouping Process (Manual)

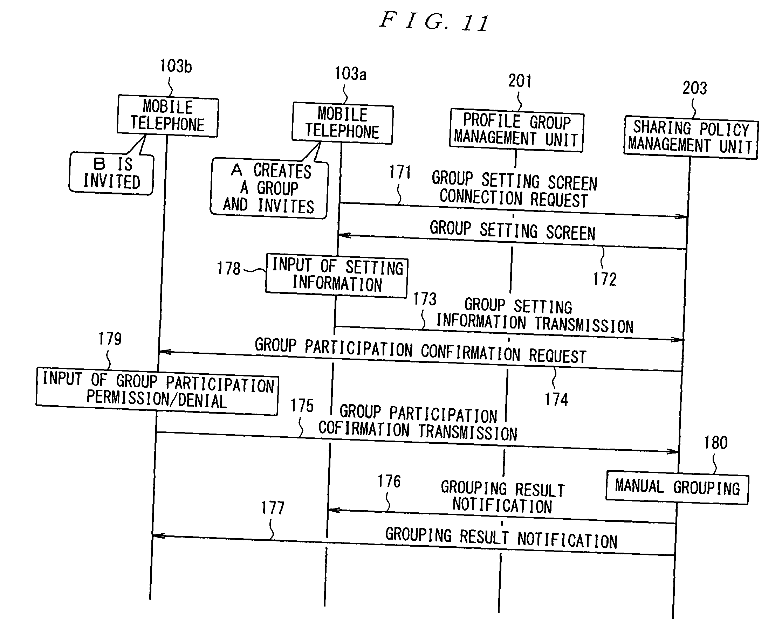

FIG. 11 is a sequence chart illustrative of a process of a case where the grouping process of creating a user group according to the present embodiment is manually performed. In FIG. 11, the user A owns the mobile telephone 103a, and the user B owns the mobile telephone 103b. It is assumed that the user A creates a group beforehand and requests the user B to participate in the group.

In such a case, the user A requests the sharing policy management unit 203 for a group setting screen provided by the data sharing system, by use of the mobile telephone 103a (step 171). The sharing policy management unit 203 provides the group setting screen to the mobile telephone 103a of the user A (step 172). The user A transmits the participation request of the user B participating in the user group, by use of the mobile telephone 103a, to the sharing policy management unit 203 (step 173). The sharing policy management unit 203 requests the mobile telephone 103b of the user B for a participation confirmation in the user group (step 174).

The user B transmits the information on permission or denial of the participation in the user group in response to a participation confirmation request of the sharing policy management unit 203 (step 175). The sharing policy management unit 203 performs the grouping process in accordance with the will of the user B, which is permission or denial (step 180). Then, the grouping result is transmitted to the mobile telephone 103a and the mobile telephone 103b (step 176, step 177). When the user A participates in the user group of the user B, the participation of the user A in the user group of the user B is registered in the profile group management unit 201.
Specifically, when the user B desires to cancel the membership of the user group of the user A, the user B has only to transmit the information indicative of an intention of cancelling the membership to the sharing policy management unit 203 from the group setting screen.

### 3.2 Grouping Process (Automatic)

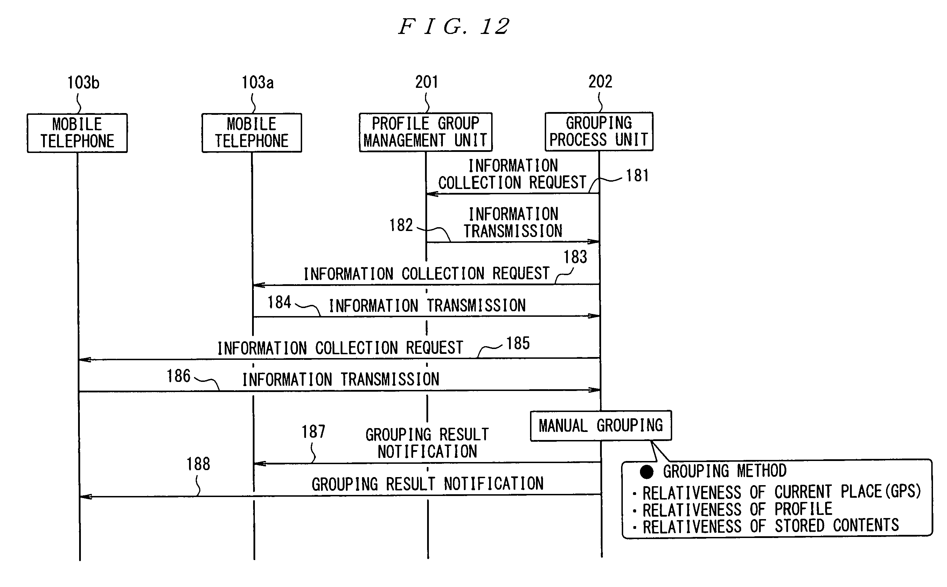

FIG. 12 is a sequence chart illustrative of the process of a case for automatic grouping process for automatically creating a user group according to the present embodiment. In FIG. 12, the user A owns the mobile telephone 103a, and the user B owns the mobile telephone 103b. The group processing unit 202 illustrated in FIG. 2 performs the grouping process automatically based upon the user's current location.

The group processing unit 202 requests the profile group management unit 201 for transmission of the profile information (step 181). The profile group management unit 201 transmits the profile information in response to the request (step 182). The group processing unit 202 extracts the user's current location from the profile information, and requests multiple users whose current locations are included in a prescribed range for transmission of information indicative of whether or not to participate in the user group (step 183, step 185). The users (examples are the user A and the user B) transmit the requested information from their mobile telephones (step 184, step 186).

The group processing unit 202 performs the grouping process of creating a group with users who desire to participate in the user group (step 189). Information indicative of which user belongs to which group is managed by the profile group management unit 201. The result of the grouping process is transmitted to the users who participate in the user group (step 187, step 188).

Specifically, the present embodiment is not limited to the configuration of automatically performing the grouping process based upon the current location. For example, the user's address or department and the sharing are requested, so that the grouping process can be performed based upon the contents stored in the user's own DB.
The grouping process based upon the address allows users who live in a specified area to share data for rules of waste disposal, use of public accommodations, business hours of stores, and the like. In addition, the grouping based upon the department allows users who belong to this department to share the sound data of incoming calls at the department of the work place, and the like. Furthermore, the grouping process based upon the content stored in the DB allows a proposal to another user who likes the same content to acquire the data and encourage the data acquisition (sales).

### 4.1 Sharing Process (Sound Data of Answering Machine, Image Data)

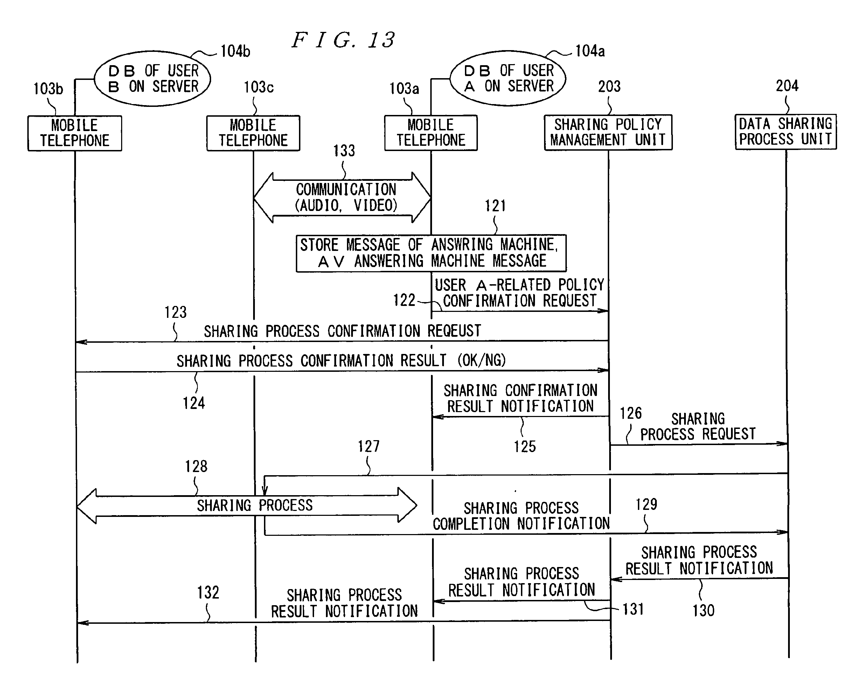

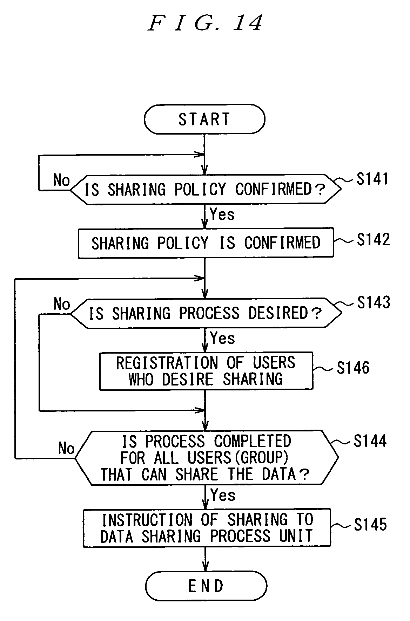

FIG. 13 is a sequence chart illustrative of the data sharing process. Additionally, FIG. 14 is a flowchart illustrative of the process performed by the sharing policy management unit 203 in the sequence illustrated in FIG. 13. In this process, the user A owns the mobile telephone 103a and the DB 104a illustrated in FIG. 1, and the user B owns the mobile telephone 103b and the DB 104b illustrated in FIG. 1. Moreover, with reference to FIG. 13 and FIG. 14, a description will be given of a case where the user B designates a user group and sets a policy to share the sound data of the voice mail or the video data.

For example, as illustrated in FIG. 13, the sound data of the voice mail is stored in the DB 104a from a mobile telephone 103c (step 133). When the data is stored (step 121), the mobile telephone 103a requests the sharing policy management unit 203 to confirm the policy of the data of the user A (step 122). The sharing policy management unit 203 confirms the policy illustrated in, for example, FIG. 4, in response to the request. Then, the users or the user group who are permitted to share the sound data of the voice mail of the user A are identified. In this process, it is assumed that the user group including the user B corresponds to the user group to which the permission of the data sharing is given.

In a case where the policy of the designated group is set for performing the data sharing manually, the sharing policy management unit 203 issues a sharing process confirmation request to the user (only the user B is illustrated in the drawing for simplification) included in the user group (step 123).
The user B transmits an instruction of whether the data sharing is to be performed (OK) or not (NG) to the sharing policy management unit 203 (step 124). When performing of the data sharing is instructed, the sharing policy management unit 203 notifies an instruction of performing the data sharing to the mobile telephone 103a, and in addition, requests the data sharing process unit 204 to share the sound data (step 126). Moreover, the sound data is shared with another user who has instructed the data sharing, among the other users who belong to the designated user group.

The data sharing process unit 204 makes the sound data shared between the DB 104a and the DB 104b in response to the request (step 128). The data sharing is achieved by the data sharing process unit 204 by copying the sound data in the DB 104a and transmitting by Push distribution or the like from the data sharing process unit 204 to the DB 104b. After the data sharing is achieved, a sharing completion notification is given to the data sharing process unit 204 from the mobile telephone 103a, the mobile telephone 103b, and a communication terminal device of another user (step 129).

The data sharing process unit 204 notifies the sharing policy management unit 203 of the result of the sharing process (step 130). The sharing policy management unit 203 also notifies the mobile telephone 103a, the mobile telephone 103b, and the communication terminal device, of another user, with which the data is shared of the result of the sharing process (step 131, step 132).
In the above operation, the sharing policy management unit operates as illustrated in FIG. 14. That is, the sharing policy management unit determines whether or not the policy confirmation is requested (step S141). As a determination result, if it is not requested (step S141: No), the sharing policy management unit waits until it is requested.

If it is requested (step S141: Yes), the sharing policy management unit confirms the policy requested (step S142). Then, whether or not the data sharing is desired is sequentially determined for the user or the user group who are permitted to share the data as to the corresponding data type and who desire the manual sharing (step S143). Specifically, as to the user or the user group who desire the automatic sharing, the data sharing is instructed to the data sharing process unit without the determination at step S143. The user or the user group determined to desire the data sharing is recorded for the subsequent Push distribution (step S146).

Then, as to the user or all in the user group with whom the data sharing is possible, whether or not they desire the sharing is determined (step S414). When the determination is not completed for all the users (step S144: No), the desire of the sharing process of an unprocessed user or user group is determined and the sharing is achieved. When the determination is completed for all the users (step S144: Yes), an instruction for sharing is issued to the data sharing process unit for all the users who desire the data sharing (step S145).

### 4.2 Sharing Process (Melody Data)

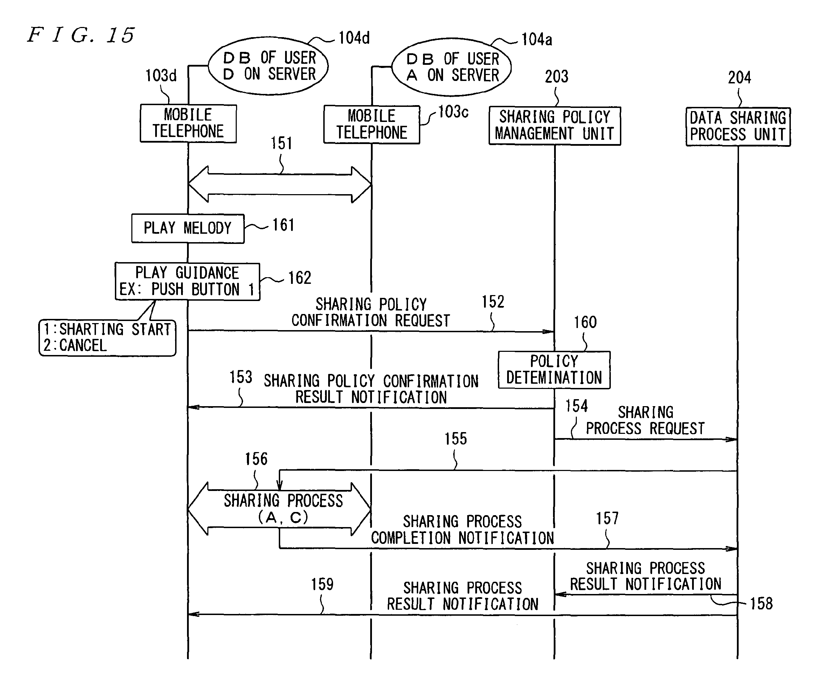

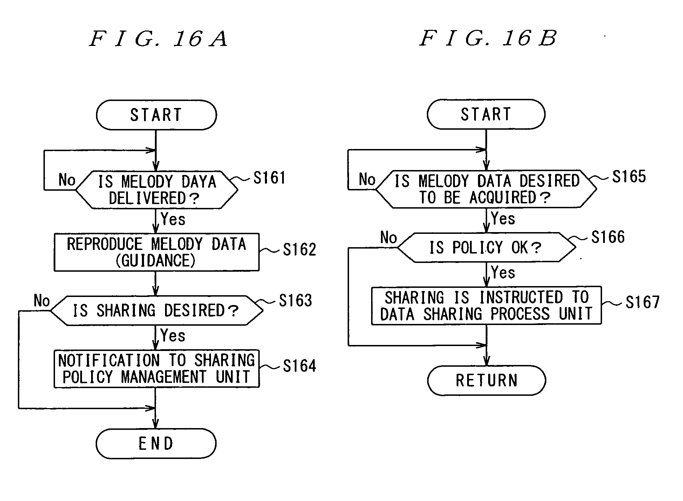

FIG. 15 is a sequence chart illustrative of the sharing process particularly suitable for the melody data of a mobile telephone. FIG. 16A is a flowchart illustrative of a process performed by a mobile telephone in the sequence illustrated in FIG. 15. FIG. 16B is a flowchart illustrative of a process performed by the sharing policy management unit in the sequence illustrated in FIG. 15. In this process, it is assumed that the user A owns a mobile telephone 1502 and the DB 104a illustrated in FIG. 1 and the user of the mobile telephone 103a owns the DB 104d illustrated in FIG. 1. It is also assumed that the user of the mobile telephone 103a designates the user group to which the user belongs, and sets the policy for the user A.

When the mobile telephone 1502 downloads the melody data, the downloaded melody data is stored in the DB 104a. The melody data is transmitted to the user group to which the sharing is permitted by the policy (step 151). The timing when the melody data is transmitted to the user group can be set at, for example, the timing when a user belonging to the user group makes a call to the user A.

On the communication terminal device (only the mobile telephone 103a is illustrated in the drawing for simplification) of the user included in the user group, the data of the transmitted melody data is reproduced to play the melody (step 161). In addition, after the melody is played, the operation guidance for acquiring the melody data may be played. The user of the mobile telephone 103a listens to the played melody, and determines whether or not to desire the acquisition of the melody data in accordance with the guidance (step 162).

The operation is, for example, to push a given button once to instruct the start of sharing in the DB, when desiring the acquisition of the melody data. Alternatively, when the data sharing is not desired, a given button is pushed twice to cancel the data sharing.
By the operation on the mobile telephone 103a, the confirmation request of the sharing policy of the user who owns the mobile telephone 103a is transmitted from the mobile telephone 103a to the sharing policy management unit 203 (step 152). The sharing policy management unit 203 determines the policy of the user group including the mobile telephone 103a (step 160).

As a determination result, when the user group including the mobile telephone 103a is permitted to share the melody data of the user A and the current time is included in a sharing period range, the sharing policy management unit 203 requests the data sharing process unit 204 for the sharing process of the data of the user group (step 154). Specifically, the policy determination result of the sharing policy management unit 203 is transmitted to all the users who desire the sharing of the melody data from the sharing policy management unit 203.

The data sharing process unit 204 shares the melody data in the DB 104a with all the users who desire to share the melody data, in response to the request from the sharing policy management unit 203 (step 156). Subsequent to the sharing, the sharing process completion is notified to the data sharing process unit 204 from the communication terminal device of the user to which the sharing process of the melody data is performed (step 157). The data sharing process unit 204 notifies the result of the sharing process to the communication terminal device of the user belonging to the user group (step 158, step 159).

In the above sequence, the process illustrated in FIG. 14A is performed on the mobile telephone 103a. A control unit, not illustrated, of the mobile telephone determines whether or not the melody data is delivered from another communication terminal device (step S161). When it is determined that the melody data is delivered (step S161: Yes), a processing circuit relating to the sound of the mobile telephone reproduces the melody data. In addition, after reproduction, the guidance information, relating to the operation for acquiring the melody data, provided from the data sharing system is provided in the form of text or sound (step S162). Furthermore, when the melody data is not delivered (step S161: No), the control unit waits until it is distributed.

The user operates the buttons of the mobile telephone in accordance with the guidance. On the mobile telephone, whether or not the user desires to share the melody data is determined by the button operation (step S163). When the acquisition is desired (step S163: Yes), the mobile telephone notifies the sharing policy management unit of the desire to acquire the melody data (step S164). When the acquisition is not desired (step S163: No), the process is terminated without notification to the sharing policy management unit.

Moreover, the sharing policy management unit determines whether or not the information indicative of the desire to acquire the melody data is transmitted from the mobile telephone, as illustrated in FIG. 14B (step S165). When it is determined that the desire to acquire the melody data is determined (step S165: Yes), the sharing policy management unit determines whether or not the policy of the user group including the user of the mobile telephone is set to the state where the acquisition is possible (step S166).

When the user of the mobile telephone is able to acquire the melody data (step S166: Yes), the sharing policy management unit instructs the sharing of the melody data to the data sharing management unit (step S167). When the acquisition of the melody data by the user group is not permitted (step S166: No), the process is terminated without issuing an instruction for sharing. Specifically, in such a case, information indicative of the fact that the data sharing is not permitted may be transmitted to the mobile telephone in form of sound or text.

### (Advantageous Effect)

In the present embodiment described heretofore, in a case where the sound data of the voice mail is shared, for example, the user A makes a call to the user B to make another user other than the user B share the recorded message of the voice mail. Accordingly, this allows the user B to talk about the content of the message recorded in the answering machine or the reaction therefor. Moreover, in a case where multiple vehicles moves toward the same destination, the GPS information of one vehicle can be shared with mobile telephones of passengers in another vehicle.

### Industrial Availability

The present invention applies to "Voice Mail Service" of NTT Docomo, whereby a recorded message of the voice mail can be shared with multiple users. In addition, when the present invention applies to "i-motion (registered trademark)", the video data can be delivered in an efficient manner.

### Reference Signs List

- 100: shared data management server
- 101: base station
- 103a, 103b, 103c, 103d: mobile telephone
- 201: profile group management unit
- 202: group processing unit
- 203: sharing policy management unit
- 204: data sharing process unit
- 301, 302: profile information
- 303: text data
- 304: video data
- 305: audio data
- 306: program data
- 601: group mapping analysis engine
- 602: user preference analysis engine
- 603: user profile relativeness analysis engine
- 604: NW server
- 606: group registration unit
- 607: automatic grouping unit

## Claims

1. A data sharing management apparatus comprising:
a plurality of data storage units connected to each other via a radio access network;
a shared data management apparatus for managing sharing of data stored in the plurality of data storage units,
wherein the shared data management apparatus comprises:
an attribute information management unit for managing attribute information on a user who can make a request of data sharing;
a group processing unit for creating a user group including a plurality of users based upon the attribute information managed by the attribute information management unit;
an authority information management unit for managing authority information on an authority for permitting a user included in the user group to share the data stored in the plurality of data storage units;
a user group identifying unit for identifying the user group permitted to share the data stored in any of the plurality of data storage units based upon the authority information; and
a data sharing process unit for storing the data stored in a data storage unit owned by the user belonging to the user group identified by the user group identifying unit.

2. A shared data management apparatus for managing sharing of data stored in a plurality of data storage units connected to each other via a radio access network, the shared data management apparatus comprising:
an attribute information management unit for managing attribute information on a user who can make a request of data sharing;
a group processing unit for creating a user group including a plurality of users based upon the attribute information managed by the attribute information management unit;
an authority information management unit for managing authority information on an authority for permitting a user included in the user group to share the data stored in the plurality of data storage units;
a user group identifying unit for identifying the user group permitted to share the data stored in any of the plurality of data storage units based upon the authority information; and
a data sharing process unit for storing the data stored in a data storage unit owned by the user belonging to the user group identified by the user group identifying unit.

3. The shared data management apparatus according to claim 2,
wherein when the user belongs to a plurality of user groups, the user group identifying unit identifies one user group, to which the data sharing is permitted, from the plurality of user groups, and
wherein the data sharing process unit stores the data on a data storage unit owned by said one user group identified by the user identifying unit.

4. The shared data management apparatus according to claim 2 or claim 3, wherein the sharing authority management unit manages the authority relating to at least one of a data type permitted to share and a period while the data sharing is permitted, for each of the users and the user groups.

5. The shared data management apparatus according to any one of claim 2 to claim 4, wherein the group processing unit creates the user group based upon at least one of attribute information on the individual user, current location information, and a content of data that had been shared in the past.

6. A control method of a shared data management apparatus for managing sharing of data stored in a plurality of data storage units connected to each other via a radio access network, the control method comprising:
an attribute information acquiring step of acquiring attribute information on a user who can make a request of data sharing;
a grouping process step of creating a user group including a plurality of the users based upon the attribute information acquired by the attribute information acquiring step;
an authority information acquiring step of acquiring authority information on an authority for permitting the user included in the user group to share the data stored in the plurality of data storage units;
a user group identifying step of identifying the user group permitted to share the data stored in any of the plurality of data storage units based upon the authority information; and
a data sharing process step of storing the data stored in a data storage unit owned by the user belonging to the user group identified by the user group identifying step.
